# EUROPÄISCHE PATENTSCHRIFT

(11) **EP 1 291 123 B1**
(45) Veröffentlichungstag und Bekanntmachung des Hinweises auf die Patenterteilung: **24.11.2004**
(21) Anmeldenummer: 02007979.4
(22) Anmeldetag: 10.04.2002
(51) Int. Cl.: B23Q 1/48, B23Q 1/01

(54) **Werkzeugmaschine zur mindestens 3-achsigen Bearbeitung von Werkstücken**
Machine tool for at least 3-axes machining of a workpiece
Machine-outil à au moins 3 axes pour l'usinage d'une pièce

(30) Priorität: 11.09.2001 DE 10144541
(43) Veröffentlichungstag der Anmeldung: 12.03.2003
(73) Patentinhaber: Cross Hüller GmbH, 71636 Ludwigsburg (DE)
(72) Erfinder: Stengele, Gerald, Dipl.-Ing., 71636 Ludwigsburg (DE); Hoffmann, Thomas, Dipl.-Ing., 74379 Ingersheim (DE); Haus, Waldemar, Dipl.-Ing., 70437 Stuttgart (DE)
(74) Vertreter: Rau, Manfred, Dr. Dipl.-Ing.

(56) Entgegenhaltungen:
- EP-A- 0 861 990
- EP-A- 0 893 196
- WO-A-00/76704
- DE-A- 19 806 085
- US-A- 6 012 884

## Beschreibung

Die Erfindung betrifft eine Werkzeugmaschine nach dem Oberbegriff des Anspruches 1.

Eine derartige aus der DE 198 06 085 A1 (entspr. US 6,328,510 B1) bekannte Werkzeugmaschine weist an der dem Arbeitsraum zugewandten Stirnseite je eine Führung für einen Schlitten auf. Weitere Einzelheiten sind dieser Veröffentlichung nicht zu entnehmen.

Aus der EP 0 893 196 A2 ist eine Werkzeugmaschine bekannt, die einen rahmenartigen Ständer aufweist, an dem ein x-Schlitten horizontal verschiebbar geführt ist. In dem ebenfalls rahmenartig ausgebildeten x-Schlitten ist ein y-Schlitten vertikal verschiebbar geführt. Der y-Schlitten trägt wiederum eine in z-Richtung verschiebbare Arbeitsspindel. Der y-Schlitten ist an jeweils zwei an den vertikalen Holmen des x-Schlittens angebrachten einander zugewandten Führungsschienen verschiebbar geführt. Jeweils zwei Führungsschienen sind in z-Richtung hintereinander und parallel zueinander angeordnet. Der y-Schlitten ist auf den dem Arbeitsraum zugewandten Führungsschienen mit jeweils zwei Führungsschuhen geführt, während er auf den dem Arbeitsraum abgewandten Führungsschienen mit jeweils einem Führungsschuh geführt ist. Die Festlegung des y-Schlittens in x-Richtung erfolgt dadurch, dass er auf jeweils zwei in x-Richtung voneinander beabstandeten Führungsschienen geführt ist.

Aus WO 00/76704 A1 ist eine Säulen-Werkzeugmaschine bekannt, deren x-Schlitten auf einem horizontalen Grundgestell verschiebbar geführt ist. Hierzu sind in z-Richtung hintereinander zwei in x-Richtung verlaufende Führungsschienen und zwischen diesen eine Kugel-Roll-Spindel zum Antrieb vorgesehen.

Aus der US 6,012,884 A ist eine Werkzeugmaschine bekannt, bei der ein x-Schlitten auf zwei vertikal voneinander beabstandeten horizontalen Schienen verschiebbar ist. Auf dem x-Schlitten ist ein vertikal verschiebbarer y-Schlitten verschiebbar angeordnet, der auf zwei in x-Richtung voneinander beabstandeten Führungsschienen geführt ist. Den Führungsschienen sind im Einzelnen nicht beschriebene oder dargestellte Linear-Antriebe zugeordnet.

Aus der EP 0 861 990 A2 sind Linearführungssysteme bekannt, bei denen Bremsschuhe vorgesehen sind.

Der Erfindung liegt die Aufgabe zugrunde, eine Werkzeugmaschine der gattungsgemäßen Art so auszugestalten, dass eine zuverlässige Führung und ein verwindungsfreier Antrieb bei kompaktem Aufbau erreicht wird.

Diese Aufgabe wird erfindungsgemäß durch die Merkmale des Anspruches 1 gelöst. Durch die Anordnung der Führungen und der zwischen ihnen liegenden Linearantriebe an der dem Innenraum zugewandten Seite der Seitenwände wird eine verwindungsfreie Führung der Antriebs-Schlitten und eine direkte Übertragung der Anziehungskräfte der Linear-Antriebe auf die Schlitten erreicht. Daraus ergibt sich insgesamt ein sehr steifer Aufbau des gesamten Bewegungssystems für die Werkzeugspindel. Die Führungen und die Linear-Antriebe liegen so, dass sie leicht zugänglich und damit einfach montierbar und demontierbar sind. Die Führungen und die Antriebe sind in der Tiefe des Ständers angeordnet.

Gemäß der Weiterbildung nach Anspruch 2 ist in die Führungen ein Sicherheitssystem integrierbar.

In den erfindungsgemäßen Aufbau lässt sich auch eine Wegmess-Einrichtung entsprechend Anspruch 3 integrieren.

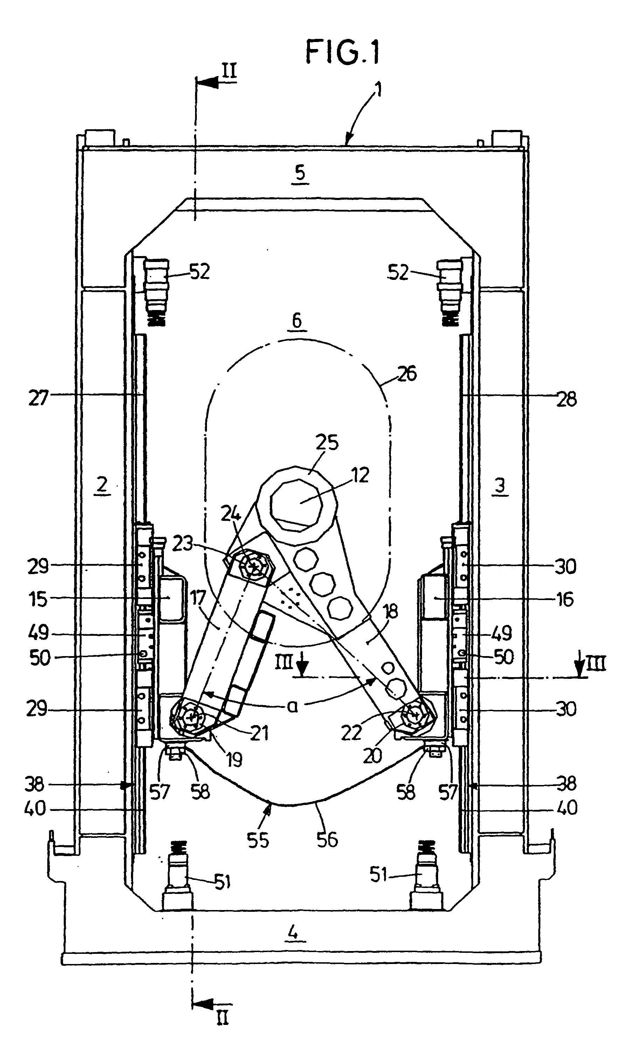

Weitere Merkmale, Einzelheiten und Vorteile der Erfindung ergeben sich aus der nachfolgenden Beschreibung eines Ausführungsbeispieles anhand der Zeichnung. Es zeigt
- Fig. 1: eine Stirnansicht der Werkzeugmaschine,

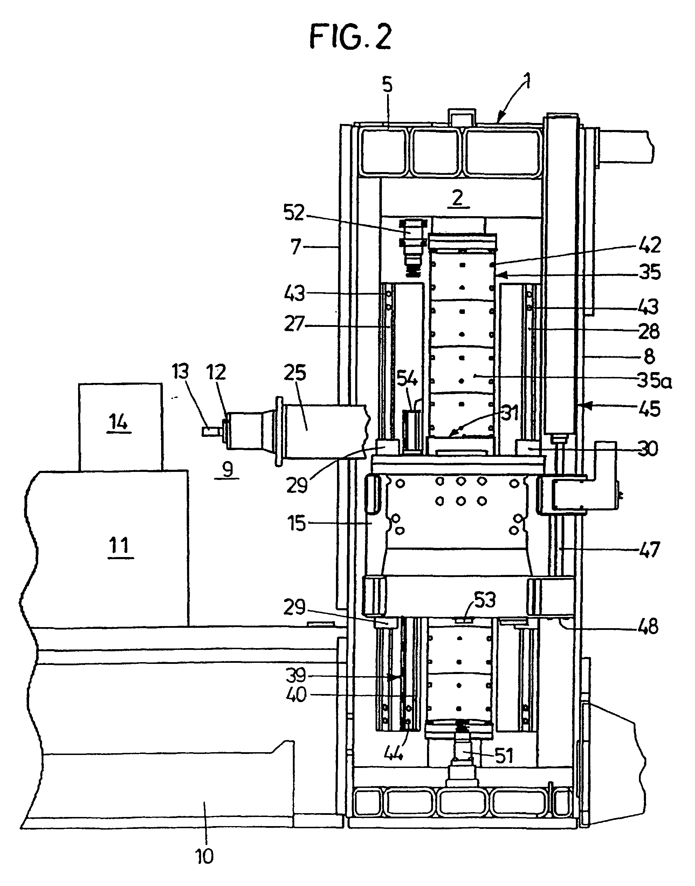

- Fig. 2: einen Vertikal-Schnitt durch die Werkzeugmaschine entsprechend der Schnittlinie II-II in Fig. 1 und

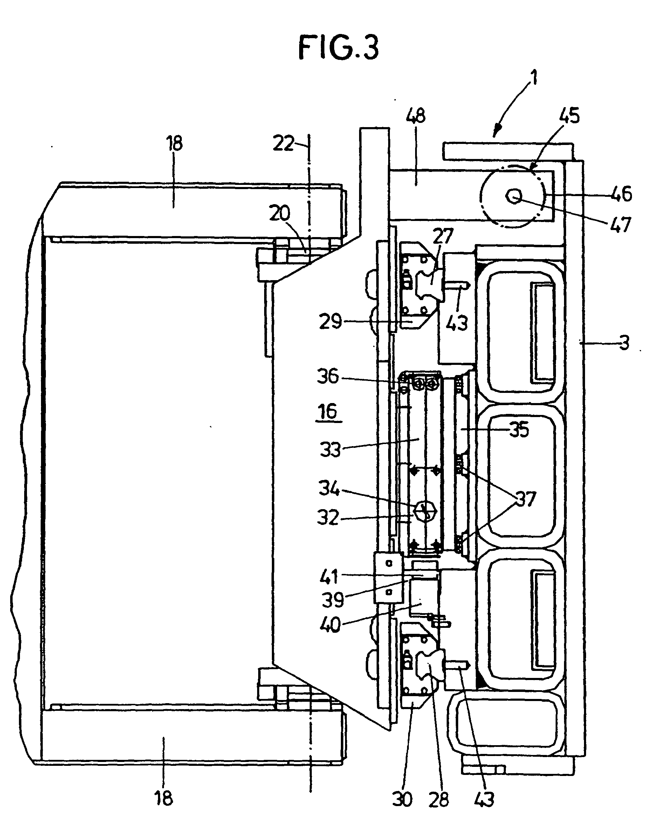

- Fig. 3: einen horizontalen Teilschnitt durch die Werkzeugmaschine entsprechend der Schnittlinie III-III in Fig. 1.

Die in der Zeichnung dargestellte Werkzeugmaschine zur mindestens 3-achsigen Bearbeitung von Werkstücken mittels eines drehantreibbaren Werkzeuges weist einen quaderförmigen Ständer 1 auf, der aus zwei zueinander parallelen vertikalen Seitenwänden 2, 3, einem Boden 4 und einem Oberteil 5 besteht, die die Seitenwände 2, 3 miteinander verbinden. Der Ständer 1 umschließt als Innenraum 6 einen sogenannten Aktorenraum und ist an seinen beiden Stirnseiten 7, 8 offen ausgebildet. Vor der einen Stirnseite 7 liegt ein Arbeitsraum 9, wo auf einem mit dem Ständer 1 verbundenen Maschinenbett 10 ein nur angedeuteter Werkstückhalter 11 angeordnet ist.

Im Innenraum 6 ist eine als Motorspindel ausgebildete Arbeitsspindel 12 angeordnet, die durch die Stirnseite 7 in den Arbeitsraum 9 vorragt und ein drehantreibbares Werkzeug 13 zur Bearbeitung eines auf dem Werkstückhalter 11 angeordneten Werkstücks 14 trägt. Üblicherweise ist die Stirnseite 7 mittels einer nicht dargestellten Abdeckung verdeckt, die bei Bewegungen der Arbeitsspindel 12 in horizontaler x-Richtung und vertikaler y-Richtung mitbewegt wird, die aber kein tragender Bestandteil des Ständers 1 ist, sondern nur dazu dient, den Arbeitsraum 9 vom Innenraum 6 zu trennen. Die Arbeitsspindel 12 kann in zur x-y-Ebene vertikalen z-Richtung bewegbar sein; es ist aber auch möglich, dass der Werkstückhalter 11 in bekannter Weise in z-Richtung bewegbar ist.

Zur Bewegung der Arbeitsspindel 12 sind zwei in y-Richtung bewegbare, an den Innenseiten der Seitenwände 2, 3 geführte Antriebs-Schlitten 15, 16 vorgesehen, die mittels zweier Koppeln 17, 18 miteinander verbunden sind. Jede Koppel 17, 18 ist mit dem zugehörigen Schlitten 15, 16 mittels eines Drehgelenks 19, 20 mit in z-Richtung verlaufender Drehachse 21, 22 verbunden. Die beiden Koppeln 17, 18 wiederum sind mittels eines Drehgelenks 23 mit in z-Richtung verlaufender Drehachse 24 miteinander verbunden. An der einen Koppel 18 ist benachbart zum Drehgelenk 23 ein rohrartiger Arbeitsspindel-Träger 25 angebracht, in dem die Arbeitsspindel 12 angeordnet ist. Dadurch, dass die drei Drehachsen 21, 22, 24 in z-Richtung verlaufen und die Schlitten 15, 16 in y-Richtung verlaufen, kann die Arbeitsspindel 12 bei Verschiebungen der Schlitten 15, 16 parallel zu sich in der x-y-Ebene innerhalb eines in dieser Ebene liegenden Arbeitsbereichs 26 verschoben werden.

Die Koppeln 17, 18 in Verbindung mit den Antriebs-Schlitten 15, 16 sind so ausgeführt, dass sich der Winkel a, den die Koppeln 17, 18 einschließen, bei der Bewegung der Arbeitsspindel 12 in jede beliebige Position im gesamten Arbeitsbereich nur um einen geringen Betrag ändert. Dadurch wird bewirkt, dass sich die beiden Koppeln 17, 18 gegenseitig versteifen, wodurch die Steifigkeit der Koppelkinematik der Arbeitsspindel 12, verglichen mit anderen bekannten Werkzeugmaschinen, bei gleichzeitiger Reduktion der bewegten Masse erhöht wird. Aus diesem Grunde führen an der Schneide des Werkzeuges 13 entstehende Zerspanungskräfte zu einer geringeren Auslenkung der Arbeitsspindel 12. Mit dieser in ihrem Grundaufbau aus der DE 198 06 085 A1 (entspr. US 6,328,510 B1) bekannten Werkzeugmaschine können daher im Vergleich zu anderen bekannten Werkzeugmaschinen schwere Zerspanungsoperationen bei gleichzeitig höherer Genauigkeit ausgeführt werden. Gleichzeitig können durch größere Beschleunigungen infolge reduzierter Masse Nebenzeiten eingespart werden.

Die Schlitten 15, 16 sind auf in z-Richtung im Abstand voneinander jeweils an der Innenseite der Seitenwände 2 bzw. 3 angeordneten Führungsschienen 27, 28 verschiebbar geführt, wozu sie mit Führungsschuhen 29, 30 versehen sind, die die Führungsschienen 27, 28 umgreifen. Jede Führungsschiene 27, 28 bildet zusammen mit den auf ihr laufenden Führungsschuhen 29 bzw. 30 eine Führung. Zwischen jeweils an einer Seitenwand 2 bzw. 3 angebrachten Führungsschienen 27, 28 und den entsprechenden Führungsschuhen 29, 30 sind als Antriebe Linearmotoren 31, 32 vorgesehen. Der jeweilige Primärteil 33 jedes Linearmotors 31, 32 ist an der der benachbarten Seitenwand 2 bzw. 3 zugewandten Seite zwischen den Paaren von Führungsschuhen 29, 30 angebracht. Die Stromversorgung der Primärteile 33 erfolgt über nur angedeutete elektrische Anschlüsse 34. Der jedem Primärteil 33 zugeordnete, durch Magnetplatten 35a gebildete Sekundärteil 35 jedes Linearmotors 31 bzw. 32 ist zwischen den paarweise im Abstand voneinander an der Innenseite der jeweiligen Seitenwand 2 bzw. 3 angeordneten Führungsschienen 27, 28 an der jeweiligen Seitenwand 2 bzw. 3 angebracht. Primärteil 33 und Sekundärteil 35 sind jeweils mittels Kühleinrichtungen 36, 37 kühlbar.

Die Position jedes Linearmotors 31, 32 wird mittels einer Wegmess-Einrichtung 38, 39 erfasst. Die Wegmess-Einrichtungen 38, 39 sind zwischen dem jeweiligen Linearmotor 31, 32 und der dem Arbeitsraum 9 benachbarten Führung 27, 29 bzw. 28, 30 angeordnet. Der linealartige ortsfeste Teil 40 jeder Einrichtung 38, 39 ist an der zugehörigen Seitenwand 2, 3 angebracht, während der als Abtasteinrichtung ausgebildete bewegliche Teil 41 am jeweiligen Schlitten 15, 16 angebracht ist.

Die Sekundärteile 35, die Führungsschienen 27, 28 und die ortsfesten Teile 40 der Wegmess-Einrichtungen 38, 39 sind mittels Schrauben 42, 43, 44 an der zum Arbeitsraum 9 hin offenliegenden Innenseite der jeweiligen Seitenwand 2 bzw. 3 angebracht und daher leicht zugänglich und damit leicht montierbar bzw. demontierbar. Entsprechendes gilt für die Primärteile 33, die Führungsschuhe 29, 30 und die beweglichen Teile 41 der Wegmess-Einrichtungen 38, 39. Die Anordnung der Linearmotoren 31, 32 zwischen den Führungen 27 bis 30 führt zu einer sehr verwindungssteifen Führung der Schlitten 15, 16. Darüber hinaus können die Anziehungskräfte des Linearmotors 31 bzw. 32 direkt in den zugehörigen Schlitten 15 bzw. 16 eingeleitet werden und bewirken damit eine geringe Verformung des Schlittens 15 bzw. 16. Die steife Bauweise der Schlitten 15, 16 sowie die günstige Anordnung der Linearmotoren 31, 32 und der Wegmess-Einrichtungen 38, 39 begünstigen das Regelverhalten der Werkzeugmaschine und damit die Bearbeitungsqualität.

Die einfache Montage ist beispielsweise in der Weise möglich, dass zuerst die Primärteile 33 am jeweiligen Schlitten 15 bzw. 16 montiert und dann der Schlitten 15, 16 auf die jeweiligen Führungsschienen 27, 28 aufgesetzt wird. Anschließend wird der Schlitten 15 bzw. 16 in eine obere oder untere Extremposition verfahren und ein Teil der den Sekundärteil 35 bildenden Magnetplatten 35a auf den freien Bereich der Innenseite der jeweiligen Seitenwand 2, 3 geschraubt. Anschließend wird der jeweilige Schlitten 15, 16 in die andere Extremposition verfahren und dann der andere Teil der Magnetplatten 35a angeschraubt.

Zum Gewichtsausgleich der Schlitten 15, 16 ist jeweils in der Seitenwand 2 bzw. 3 des Ständers 1 eine Gewichtsausgleichs-Einrichtung 45 vorgesehen, die im wesentlichen aus einer als Kolben-Zylinder-Einheit ausgebildeten Gasfeder 46 besteht, deren Kolbenstange 47 an einer unteren Konsole 48 des jeweiligen Schlittens 15, 16 angebracht ist. Die Gasfeder 46 übt auf den jeweiligen Schlitten eine in y-Richtung nach oben gerichtete Zugkraft aus, durch die das Gewicht des jeweiligen Schlittens 15 bzw. 16 mit allen von diesem getragenen Teilen kompensiert wird. Im Hinblick darauf, dass die Koppeln 17, 18 und der Arbeitsspindel-Träger 25 mit Arbeitsspindel 12 auch in x-Richtung bewegbar sind, ändert sich die am jeweiligen Schlitten 15 bzw. 16 während des Betriebs der Maschine angreifende Gewichtskraft, sodass eine vollständige Kompensation der Gewichtskräfte über die Gewichtsausgleichs-Einrichtung 45 nicht stattfindet, worauf es aber nicht ankommt. Die Gasfedern 46 können über eine nicht dargestellte Druckluftversorgung und eine entsprechende Ansteuerung hinausgehend über den Gewichtsausgleich zum Bewegen der Schlitten 15 bzw. 16 bei Wartungsarbeiten eingesetzt werden, wenn die Energieversorgung der Linearmotoren 31, 32 ausgeschaltet ist.

Weiterhin ist zwischen den jeweils einer Führungsschiene 27 bzw. 28 zugeordneten Führungsschuhen 29, 30 ein Bremsschuh 49 angeordnet, der ebenfalls mittels Schrauben 50 am jeweiligen Schlitten 15, 16 angebracht ist. Die Bremsschuhe 49 sind während des Betriebes mittels Druckluft geöffnet; bei einer Unterbrechung der Spannungsversorgung der Linearmotoren 31, 32 werden die Bremsschuhe 49 entlüftet und schließen sich, sodass die Schlitten 15, 16 auf den Führungsschienen 27, 28 wie mittels einer mechanischen Feststellbremse festgehalten werden.

Zugeordnet zum Boden 4 und zum Oberteil 5 sind für jeden Schlitten 15, 16 Endlagendämpfer 51, 52 vorgesehen, denen entsprechende Anschläge 53, 54 am jeweiligen Schlitten 15 bzw. 16 zugeordnet sind. Hierdurch wird erreicht, dass diese Endlagendämpfer 51 bzw. 52 zur Wirkung kommen, wenn einer der Schlitten 15, 16 den in der Steuerung vorgegebenen oberen bzw. unteren maximalen Verfahrweg überschreitet. Weiterhin ist es bei einem Ausfall der Steuerung oder einer sonstigen Störung vorstellbar, dass der relative Abstand der beiden Schlitten 15, 16 in vertikaler y-Richtung mit der Folge zu groß wird, dass die Arbeitsspindel 12 in horizontaler x-Richtung den Arbeitsbereich 26 verlässt und der Arbeitsspindel-Träger 25 gegen eine Seitenwand 2 bzw. 3 einschließlich der dort angebrachten Teile schlägt. Um dies zu verhindern, ist ein Abstands-Begrenzer 55 vorgesehen, der beispielsweise aus einem biegsamen Band 56 bestehen kann, dessen Enden jeweils über eine Druckplatte 57 an der Unterseite jedes Schlittens 15, 16 gehalten ist, die mit dem Schlitten 15, 16 mittels Schrauben 58 verbunden ist. Dieses biegsame Band 56 ist in seiner Steifigkeit so ausgelegt, dass es bei einem Versagen der Linearmotoren 31, 32 die kinetische Energie der gesamten in der x-y-Ebene bewegten Masse - gegebenenfalls zusammen mit den Endlagendämpfern 51, 52 - abbaut bzw. umwandelt, ohne dass der Arbeitsspindel-Träger 25 oder ein anderes bewegtes Teil mit einer mechanischen Begrenzung kollidiert. Als Energie-Umwandlung kommt insbesondere eine elastische Deformation des Bandes 56 in Betracht, wodurch die Energie als potentielle Energie gespeichert wird. Das biegsame Band 56 kann aus unterschiedlichen Materialien bestehen. Vorzugsweise kommt ein Gewebeband aus Polyamid zum Einsatz, wie es von Lastaufnahmemitteln aus der Fördertechnik bekannt ist. Derartige Bänder wandeln jedoch nicht die gesamte aufgenommene Energie in Wärme um; vielmehr kommt es am Ende eines solchen Notfall-Weges zu einem Zurückfedern. Der Notfall-Weg ist dabei der Weg des Arbeitsspindel-Trägers 25. Das Band 56 erfährt bei einem solchen Notfall eine bleibende Dehnung und muss entsprechend ausgewechselt werden.

## Patentansprüche

1. Werkzeugmaschine zur mindestens 3-achsigen Bearbeitung von Werkstücken
- mit einem gehäuseartigen Ständer (1), der
- - Seitenwände (2, 3),
- - einen Innenraum (6) und
- - eine zu einem Arbeitsraum (9) hin offene Stirnseite (7) aufweist,
- mit einer im wesentlichen im Innenraum (6) angeordneten, in einer z-Richtung in den Arbeitsraum (9) ragenden Arbeitsspindel (12),
- mit je einem an jeder Seitenwand (2, 3) geradlinig in einer y-Richtung verschiebbar geführten Antriebs-Schlitten (15, 16),
- mit an den Antriebs-Schlitten (15, 16) mittels Drehgelenken (19, 20) angelenkten, mittels eines Drehgelenks (23) mit einander verbundenen Koppeln (17, 18), die die Arbeitsspindel (12) tragen, und
- mit Antrieben für die Antriebs-Schlitten (15, 16),
**dadurch gekennzeichnet,**
**dass** die Antriebs-Schlitten (15, 16) jeweils auf zwei in z-Richtung voneinander beabstandeten Führungsschienen (27, 28) verschiebbar geführt sind, wobei die Führungsschienen (27, 28) jeweils an der dem Innenraum (6) zugewandten, zum Innenraum (6) hin offenliegenden Seite der Seitenwand (2, 3) angeordnet sind, dass am jeweiligen Antriebs-Schlitten (15, 16) die Führungsschienen (27, 28) umfassende Führungsschuhe (29, 30) angebracht sind, wobei jede Führungsschiene (27, 28) zusammen mit den auf ihr laufenden Führungsschuhen (29, 30) eine Führung bildet, und **dass** die Antriebe als zwischen den Führungen angeordnete Linearmotoren (31, 32) ausgebildet sind, wobei jeweils ein erster Teil (33) der Linearmotoren (31, 32) am Antriebs-Schlitten (15, 16) und ein zweiter Teil (35) an der Seitenwand (2, 3) angebracht ist.

2. Werkzeugmaschine nach Anspruch 1, **dadurch gekennzeichnet,**
**dass** auf jeder Führungsschiene (27, 28) im Abstand voneinander zwei Führungsschuhe (29, 30) angeordnet sind, zwischen denen ein am Antriebs-Schlitten (15, 16) angebrachter Bremsschuh (49) angeordnet ist.

3. Werkzeugmaschine nach einem der Ansprüche 1 oder 2, **dadurch gekennzeichnet,**
**dass** zwischen einer Führung (27, 29) jedes Antriebs-Schlittens (15, 16) und dem Linearmotor (31, 32) eine Wegmess-Einrichtung (38, 39) vorgesehen ist.

4. Werkzeugmaschine nach Anspruch 1, **dadurch gekennzeichnet,**
**dass** die zweiten Teile (35) der Linearmotoren (31, 32) und die Führungsschienen (27, 28) vom Innenraum (6) her an die Seitenwand (2, 3) angeschraubt sind.

## Claims

1. A machine tool for at least triaxial machining of work pieces, comprising
- a column (1) of the type of a casing, which has
-- side walls (2, 3),
-- an interior space (6), and
-- a front (7), which is open towards a working area (9);
- a work spindle (12), which is disposed substantially in the interior space (6), projecting in a z direction into the working area (9);
- a driving skid (15, 16) on each side wall (2, 3), which is displaceably guided thereon straight in a y direction;
- couplers (17, 18), which are articulated to the driving skids (15, 16) by hinges (19, 20) and which are connected to each other by a hinge (23) and which carry the work spindle (12); and
- drives for the driving skids (15, 16);
**characterized**
**in that** the driving skids (15, 16) are displaceably guided on two guide rails (27, 30) that are spaced from each other in the z direction, wherein the guide rails (27, 28) are disposed on the side of the side wall (2, 3) that is turned towards the interior space (6) and open towards the interior space (6);
**in that** guide shoes (29, 30) are mounted on the respective driving skid (15, 16), enclasping the guide rails (27, 28), wherein each guide rail (27, 28) combined with the guide shoes (29, 30) that run on it constitutes a guide; and
**in that** the drives are linear motors (31, 32) which are disposed between the guides, a first part (33) of the linear motors (31, 32) being mounted on the driving skid (15, 16) and a second part (35) on the side wall (2, 3).

2. A machine tool according to claim 1, **characterized in that** two guide shoes (29, 30) are disposed at a distance from each other on each guide rail (27, 28), a brake shoe (49), which is mounted on the driving skid (15, 16), being disposed between the two guide shoes (29, 30).

3. A machine tool according to one of claims 1 or 2, **characterized in that** a path measuring system (38, 39) is provided between a guide (27, 29) of each driving skid (15, 16) and the linear motor (31, 32).

4. A machine tool according to claim 1, **characterized in that** the second parts (35) of the linear motors (31, 32) and the guide rails (27, 28) are screwed from the interior space (6) onto the side wall (2, 3).

## Revendications

1. Machine-outil pour l'usinage à au moins 3 axes d'une pièce :
- avec un montant de type bâti (1) qui comporte
- - des parois latérales (2, 3),
- - un espace intérieur (6) et
- - une face frontale (7) ouverte vers l'espace de travail (9),
- avec un arbre moteur (12) disposé pour l'essentiel dans l'espace intérieur (6) et qui dépasse dans l'espace de travail (9) dans une direction z,
- avec respectivement un chariot d'entraînement (15, 16) à guidage mobile rectiligne dans une direction y sur chaque paroi latérale (2, 3),
- avec des bielles articulées (17, 18) sur les chariots d'entraînement (15, 16) par des articulations à charnière (19, 20), reliées les unes aux autres par une articulation à charnière (23), qui portent l'arbre moteur (12) et
- avec des entraînements pour les chariots d'entraînement (15, 16),
**caractérisée en ce que**
les chariots d'entraînement (15, 16) sont respectivement guidés de manière mobile sur deux rails de guidage (27, 28) écartés l'un de l'autre dans une direction z, les rails de guidage (27, 28) étant respectivement disposés sur le côté de la paroi latérale (2, 3) dirigé vers l'espace intérieur (6), ouvert vers l'espace intérieur (6),
**en ce que** les sabots (29, 30) entourant les rails de guidage (27, 28) sont placées sur le chariot d'entraînement correspondant (15, 16), chaque rail de guidage (27, 28) formant une coulisse avec les sabots (29, 30) qui se déplacent sur elle, et **en ce que** les entraînements sont configurés comme des moteurs linéaires (31, 32) disposés entre les coulisses, une première partie (33) des moteurs linéaires (31, 32) étant respectivement placée sur le chariot d'entraînement (15, 16) et une deuxième partie (35) sur la paroi latérale (2, 3).

2. Machine-outil selon la revendication 1, **caractérisée en ce que** sur chaque rail de guidage (27, 28) deux sabots (29, 30) écartés l'un de l'autre, entre lesquels un sabot de freinage (49) est disposé sur le chariot d'entraînement (15, 16) sont disposés.

3. Machine-outil selon une des revendications 1 ou 2, **caractérisée en ce que**
un système de mesure de déplacement (38, 39) est prévu entre une coulisse (27, 29) de chaque chariot d'entraînement (15, 16) et le moteur linéaire (31, 32).

4. Machine-outil selon la revendication 1, **caractérisée en ce que** les deuxièmes parties (35) des moteurs linéaires (31, 32) et les rails de guidage (27, 28) sont vissés sur la paroi latérale (2, 3) à partir de l'espace intérieur (6).
